# EUROPEAN PATENT SPECIFICATION

(11) **EP 3 874 638 B1**
(45) Date of publication and mention of the grant of the patent: **02.08.2023**
(21) Application number: 19794587.6
(22) Date of filing: 01.11.2019
(51) Int. Cl.: H04L 1/08, H04L 1/1867

(54) **APPARATUS, METHOD AND COMPUTER PROGRAM**
VORRICHTUNG, VERFAHREN UND COMPUTERPROGRAMM
APPAREIL, PROCÉDÉ ET PROGRAMME INFORMATIQUE

(30) Priority: 01.11.2018 WO PCT/EP2018/079956; 22.01.2019 GB 201900884
(43) Date of publication of application: 08.09.2021
(73) Proprietor: Nokia Technologies Oy, 02610 Espoo (FI)
(72) Inventor: KUO, Ping-Heng, Bristol BS1 5SW (GB); SEBIRE, Benoist Pierre, Tokyo, 106--6141 (JP); LASELVA, Daniela, 9270 Klarup (DK)
(74) Representative: Nokia EPO representatives
(86) International application number: PCT/EP2019/079957
(87) International publication number: WO 2020/089451

(56) References cited:
- ERICSSON: "Dynamic reconfiguration of split bearer or duplication", 3GPP DRAFT; R2-1704374 - PDCP DYNAMIC RECONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou; 20170515 - 20170519 6 May 2017 (2017-05-06), XP051264388, Retrieved from the Internet: URL:http://www.3gpp.org/ftp/tsg_ran/WG2_RL 2/TSGR2_98/Docs/ [retrieved on 2017-05-06]
- ZTE: "Discussion on LCP procedure for PC5 CA", 3GPP DRAFT; R2-1804509_DISCUSSION ON LCPPROCEDURE FOR PC5 CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428240, Retrieved from the Internet: URL:http://www.3gpp.org/ftp/Meetings%5F3GP P%5FSYNC/RAN2/Docs/ [retrieved on 2018-04-14]
- INSTITUTE FOR INFORMATION INDUSTRY (III): "CA duplication impact to LCP", 3GPP DRAFT; R2-1804870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, P.R. of China; 20180416 - 20180420 14 April 2018 (2018-04-14), XP051428573, Retrieved from the Internet: URL:http://www.3gpp.org/ftp/Meetings%5F3GP P%5FSYNC/RAN2/Docs/ [retrieved on 2018-04-14]

## Description

### Field

The present application relates to a method, apparatus, system and computer program and in particular but not exclusively to packet duplication in Packet Data Convergence Protocol (PDCP).

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). ERICSSON "Dynamic reconfiguration of split bearer or duplication", 3GPP DRAFT; R2-1704374, 6 May 2017, discloses which aspects of the UL transmission behaviour of PDCP should be dynamically reconfigurable. For UL duplication in particular, certain agreements were reached in RAN2#97bis.

### Summary

In a first aspect there is provided an apparatus according to independent claim 1.

In a second aspect there is provided an apparatus according to independent claim 13. In a third aspect there is provided a method according to independent claim 15. In a fourth aspect there is provided a computer readable medium according to independent claim 16.

### Description of Figures

Embodiments will now be described, by way of example only, with reference to the accompanying Figures in which:
Figure 1 shows a schematic diagram of an example communication system comprising a base station and a plurality of communication devices;
Figure 2 shows a schematic diagram of an example mobile communication device;
Figure 3 shows a schematic diagram of an example control apparatus;
Figure 4 shows an example block diagram of PDCP PDU duplication;
Figure 5 shows an example MAC control element (CE);
Figure 6 shows a flowchart of a method according to an example embodiment;
Figure 7 shows a flowchart of a method according to an example embodiment;
Figure 8 shows a timeline for a logical channel according to an example embodiment;
Figure 9 shows a block diagram of uplink protocols according to an example embodiment;
Figure 10 shows a flowchart of an example implementation;
Figure 11 shows a signalling flow diagram according to an example embodiment.

### Detailed description

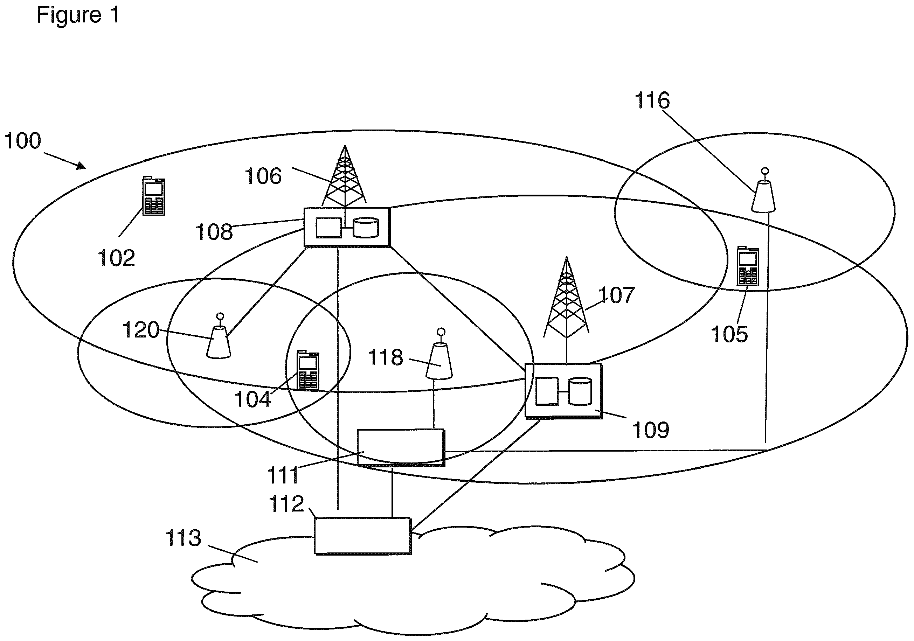

Before explaining in detail the examples, certain general principles of a wireless communication system and mobile communication devices are briefly explained with reference to Figures 1 to 3 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatuses. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UE(s) exchanging traffic with the DN.

The UPF is controlled by an SMF (Session Management Function) that receives policies from a PCF (Policy Control Function). The CN may also include an AMF (Access & Mobility Function).

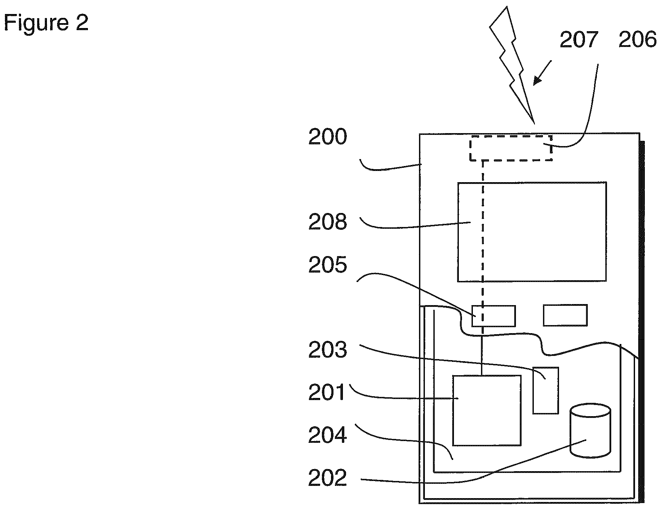

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

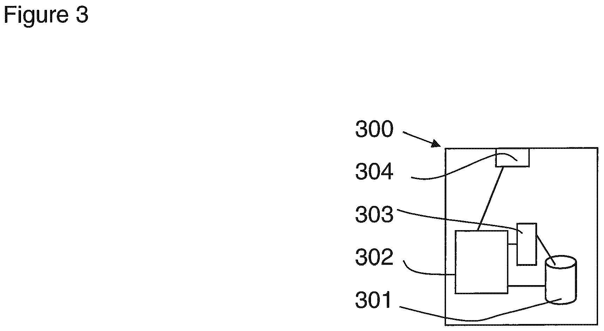

Figure 3 shows an example of a control apparatus 300 for a communication system, for example to be coupled to and/or for controlling a station of an access system, such as a RAN node, e.g. a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Ultra-Reliable Low Latency Communications (URLLC) is a feature of 5G that may enable support of emerging applications in different verticals beyond conventional telecommunication services. The targeted use cases of URLLC include various delay-sensitive applications such as tactile internet, autonomous driving, and smart factories. The first industrial standard of 5G communications, namely 3GPP Release-15, introduces several enhancements across multiple radio access networks (RAN) protocol layers in a bid to meet the goals of URLLC. For instance, the Layer-1 has adopted frame structures with flexible transmission time intervals (TTIs) and mixed numerologies. In each sublayer of the Layer-2, modifications have been made in the protocols to reduce the potential processing delay.

By utilizing the framework of carrier aggregation (CA) and dual-connectivity (DC) from previous releases, PDCP duplication has been employed in Release-15 as an approach to provide URLLC. For example, redundant PDCP Protocol Data Units (PDU) are processed and transmitted over independent paths (e.g. different component carriers) which may achieve diversity gain. Such a scheme may increase the probability of successful communication, because when the receiver fails to decode a PDCP PDU, it can exploit the redundant version to recover the data in time, which may improve both reliability and latency performance. On the other hand, if the receiver is able to decode one of the copies successfully, the other copy of the PDCP PDU will be discarded by the receiver.

PDCP duplication in Release-15 may be conducted with either Carrier Aggregation (CA) or Dual Connectivity (DC), depending on how many gNB nodes are involved in downlink transmission and uplink reception.

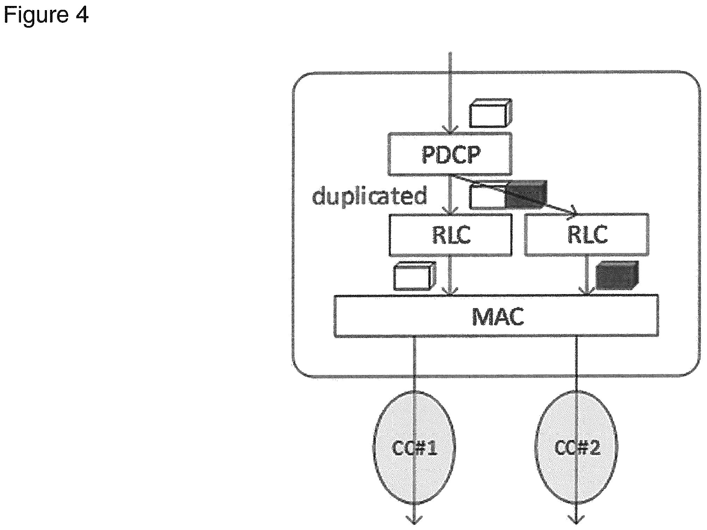

Figure 4 shows an exemplary PDCP duplication scheme for a transmitter wherein, a separate RLC sublayer is established to handle the duplicated PDCP PDU, then the two corresponding RLC PDUs will be passed to a single MAC entity and mapped to different component carriers.

Enhancement of PDCP duplication is being considered to, for example, improve resource efficiency, and/or performance by increasing the number of active duplication legs via CA/DC combinations for PDCP.

Although PDCP duplication may allow the reliable and timely communication required by URLLC use cases PDCP Duplication may be an expensive approach, since more radio resource and transmission power are used to transmit two copies of the PDCP PDU as would be to transmit one. Essentially, the required radio resource is doubled (two component carriers or two nodes are leveraged to transmit one PDCP PDU), which may be undesirable, for example in networks with heavy traffic loads. This may also be undesirable in uplink cases as most UEs are battery powered and/or may be constrained in the transmit power. Moreover, it may be more power consuming for a UE to handle PDCP duplication in downlink.

Motivated by the need of efficiency improvement, the study item (SI) for 5G New Radio (NR) Release-16 aims to examine L2/L3 solutions that may enhance resource efficiency for PDCP duplication. Specifically, the SI description clearly states that resource efficient PDCP duplication may consider solutions that strike a balance between resource efficiency and achievable performance. In addition, the SI is also considering the possibility of dynamic switching of duplication carriers (dubbed *legs* in 3GPP discussions) to boost performance by adaptation gain.

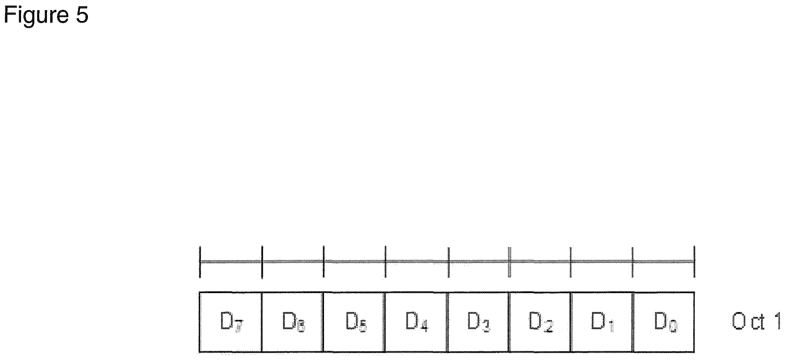

In Release-15, to save the radio resource required for PDCP duplication, the duplication in uplink (UL) direction may be activated/deactivated by the gNB on a per-DRB basis. The RRC provides an initial configuration to the UE indicating whether PDCP duplication is applicable for each of the DRB. Afterwards, the activation status of duplication of each DRB configured with PDCP duplication is indicated via MAC CE command. According to TS 38.321, §6.1.3.11, Duplication Activation/Deactivation MAC CE (as depicted in Figure 5) may be multiplexed into MAC PDU, for activating or deactivating duplication for the DRBs in a more dynamic manner. For example, the field Dᵢ of the example MAC CE shown in Figure 5 indicates the activation/deactivation status of the PDCP duplication of DRB i where i is the ascending order of the DRB ID among the DRBs configured with PDCP duplication and with RLC entity(ies) associated with this MAC entity. The Dᵢ field is set to one to indicate that the PDCP duplication of DRB i shall be activated. The Dᵢ field is set to zero to indicate that the PDCP duplication of DRB i shall be deactivated. If it is activated for a DRB, all PDCP PDUs associated to this DRB should be duplicated by the UE.

In Release-15, when duplication is activated for a DRB, all PDCP PDUs associated with the DRB are duplicated. This may still result in inefficient resource utilization as duplication of some PDUs may be unnecessary. If a network would like to save radio resources (e.g. due to high load in a cell), it may choose to deactivate the duplication. For duplication over DC, in the current specifications, there is no coordination between the nodes on when to activate/deactivate the duplication and hence the duplication may still be activated while the original link is performing well enough or duplication may be deactivated by the secondary node (e.g. due to load conditions as mentioned above), even though the reliability on the original node is not sufficient.

In an alternative proposal, a method is provided to allow a UE to autonomously decide dropping duplicated uplink packets. The decision to drop a duplicated packet is made in accordance with the lower-layer configuration/status of transmission relating to the original packet. However, the transmitter may erroneously predict the necessity of packet duplication, which could lead to either performance degradation or resource wastage, depending on whether the transmitter is too optimistic or pessimistic of the performance of the original packet transmission. Additionally, the proposed method allows packet dropping when the original link is performing well, but does not consider how to proceed when the performance of the original link is deemed to degrade.

The following aims to provide a more flexible framework enabling resource efficient PDCP duplication catering for the NR IIoT (Industrial Internet of Things) SI of Rel-16. A mechanism is proposed that may be standardized in future 5G releases catering to the potential enhancements of uplink PDCP duplication described above. For example, the proposed mechanism may improve resource efficiency of uplink PDCP duplication while not compromising performance, as well as supporting dynamic switching of leg pairs for uplink PDCP duplication.

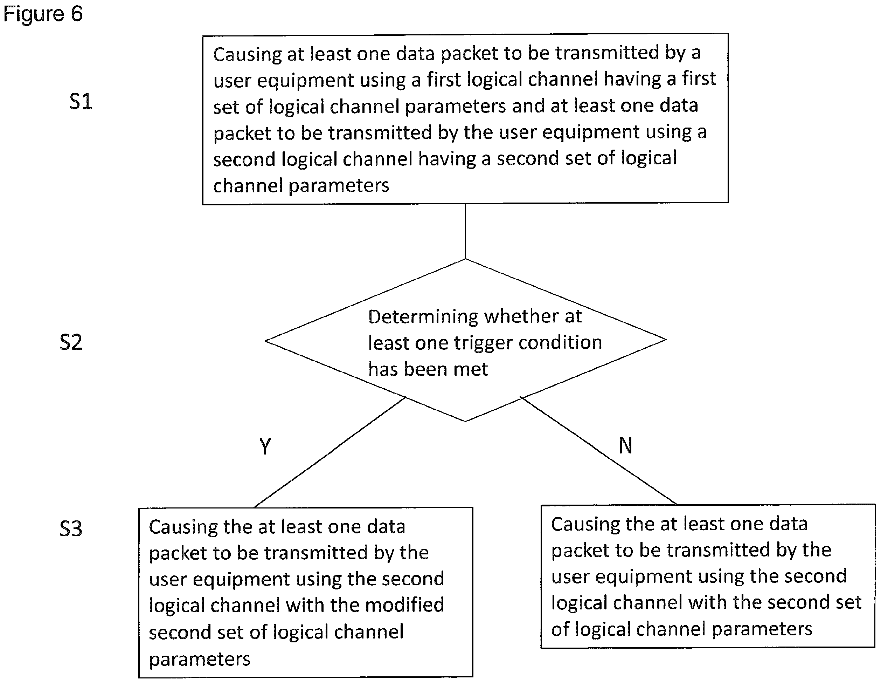

Figure 6 shows a flowchart of a method according to an example embodiment.

In a first step, S1, the method comprises causing at least one data packet to be transmitted by a communication device 200, e.g., a user equipment, using a first logical channel having a first set of logical channel parameters and at least one data packet to be transmitted by the user equipment using a second logical channel having a second set of logical channel parameters.

In a second step, S2, the method comprises determining whether at least one trigger condition has been met.

If so, in a third step, S3, the method comprises causing the at least one data packet to be transmitted by the communication device 200, e.g., a user equipment, using the second logical channel with a modified second set of logical channel parameters. If not, the third step, S3, comprises causing the at least one data packet to be transmitted by the communication device 200, e.g., a user equipment using the second logical channel with the second set of logical channel parameters.

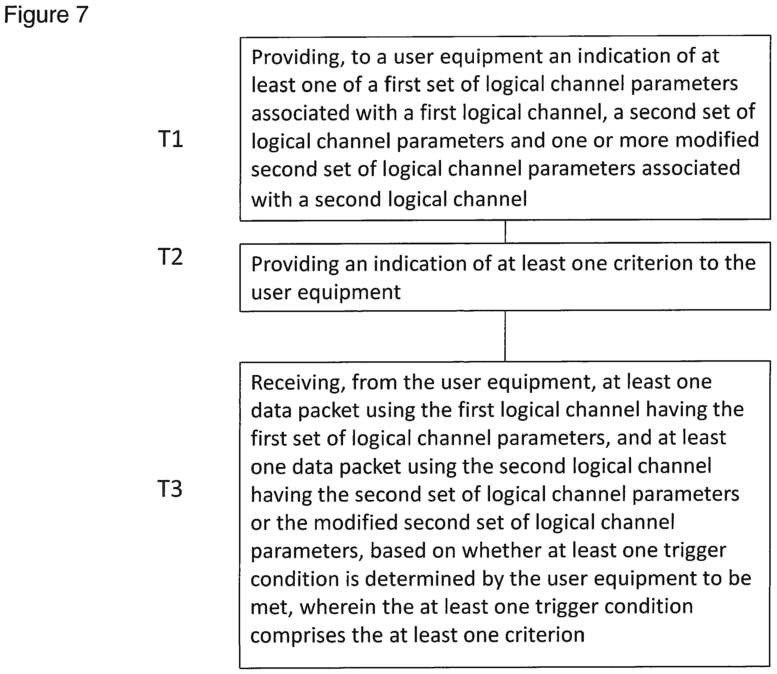

Figure 7 shows a flowchart of a method according to an example embodiment. The method may be performed at a control apparatus 300, e.g. a base station. In a first step T1, the method comprises providing, to a communication device 200, e.g., a user equipment, an indication of at least one of a first set of logical channel parameters associated with a first logical channel, a second set of channel parameters and one or more modified second set of logical channel parameters associated with a second logical channel.

In a second step, T2, the method comprises providing an indication of at least one criterion to the communication device 200, e.g., a user equipment.

In a third step, T3, the method comprises receiving, from the communication device 200, e.g., a user equipment" at least one data packet using the first logical channel having the first set of logical channel parameters, and at least one data packet using the second logical channel having the second set of logical channel parameters or the modified second set of logical parameters, based on whether at least one trigger condition is determined by the communication device 200, e.g., a user equipment, to be met, wherein the at least one trigger condition comprises the at least one criterion

The base station may be a gNB.

The data packets may be protocol data units (PDU), of a packet data convergence protocol, (PDCP) sublayer.

The term "logical channel" refers to Layer-2 logical channels used in 3GPP terminology: In 3GPP specifications, several types of data transfer services are offered by MAC. Each logical channel type is defined by the type of information that it transfers.

The at least one data packet to be transmitted using the second logical channel is a duplicate of the at least one data packet to be transmitted by the first logical channel. In this case, the first logical channel may be referred to as a primary, or original, logical channel and the second channel as the secondary, or duplicate, logical channel.

The logical channel parameters are logical channel prioritisation (LCP) parameters. The LCP parameters may comprise at least one of LCH priority, prioritised bit rate (PBR), bucket size duration (BSD), and logical channel prioritisation restrictions. LCP Restriction related LCP parameters may include:
allowedSCS-List - If present, UL MAC Service Data Units (SDU) from this logical channel may only be mapped to the indicated numerology.
allowedServingCells - If present, UL MAC SDUs from this logical channel may only be mapped to the serving cells indicated in this list (this is typically used for PDCP duplication to ensure the duplicates are transmitted on a different cell to the original).
configuredGrantType1Allowed - If present, UL MAC SDUs from this logical channel may be transmitted on a configured grant type 1.
maxPUSCH-Duration - If present, UL MAC SDUs from this logical channel may only be transmitted using uplink grants that result in a Physical Uplink Shared Channel (PUSCH) duration shorter than or equal to the duration indicated by this field.

Alternatively, or in addition, other LCP restrictions related to the configuration parameters of the uplink grants (including dynamic grants and configured grants) that the logical channel may be mapped to, are possible. The configuration parameters of the uplink grants may include Modulation and Coding Scheme (MCS), Transport Block Size (TBS), Transmission Power, Hybrid Automatic Repeat Request (HARQ) setting, number of PUSCH repetitions, and periodicity.

It is possible to reduce the PBR of the LCH to zero upon adaptation, that is, only allocate payload bits of the MAC SDUs from this LCH into the MAC PDU when there is still remaining space available after the first loop LCP procedure. If there is no space available after the first loop LCP procedure, none of the payload bits of the MAC SDUs from this LCH is allocated.

The method comprises receiving an indication of at least one of the first set of logical channel parameters, the second set of logical channel parameters (referred to as the default set) and one or more modified second set of logical channel parameters (which may be referred to as the conditional set). The indication may be configured by RRC. That is, the UE may be configured with one default set of LCP parameters for use by the LCH and at least one conditional set (the modified set).

That is, a LCH may be configured with two different sets of LCP parameters (one is the default set and one is the conditional set). The configured LCP parameter sets may be shared by more than one LCH, so signalling overhead may be reduced by avoiding configuring each LCH individually. The conditional set(s) may be pre-defined (e.g. elaborated in specifications), so over the air configuration may be omitted.

The method may comprise receiving an indication of the logical channel parameters associated with the reference LCH (which may be the first logical channel). The UE may be configured with a reference LCH, which is the LCID of the counterpart LCH corresponding to this DRB. The indication of the reference LCH may not be needed, assuming that the UE should know which pairs of LCHs are counterparts for duplication.

The gNB may configure only the initial set of LCP parameters for a LCH (the default set), with no conditional sets configured. That is, the indication of the modified second set of logical channel parameters may comprise an indication of an offset for at least one of the second set of logical channel parameters. For example, the gNB may provide ranges of value increment and/or decrement, so the UE can derive the new parameter values itself when the triggering conditions are met. Alternatively, how the LCP parameters are changed may be pre-defined, e.g. specified by standardization, which may reduce the overhead of RRC messages.

For example, if the CQI (Channel Quality Indicator) of serving cell for the reference LCH drops below a certain threshold level, the LCH corresponding to the replica of this reference LCH should increment its priority by 1.

When PDCP duplication takes place, it is also possible to allow adaptive LCP for both LCHs (the original one and replica one), and they may use each other as the "reference LCH" for sake of LCP adaptation. That is, either the original or the duplicate LCH may be the first and second LCH, respectively.

The at least one trigger condition comprises at least one criterion associated with the first LCH (or reference LCH). The method comprises receiving an indication of the at least criterion from a base station.

That is, a gNB may configure a set of triggering criteria associated with at least one LCH, such that the UE changes the LCP parameters of at least one second LCH from the default set of parameters to the conditional set of parameters (or vice versa) when certain conditions are met.

The triggering criteria may be related to the channel for the indicated reference LCH (and corresponding radio link). For example, if the CQI relating to the radio link for the reference LCH has stayed below a threshold for a certain length of time. The criteria may be related to radio link quality.

The triggering criteria are related to at least one of transmission configuration, data transmission performance and transmission status for the indicated reference LCH, for example the accumulated queueing delay of the reference LCH (i.e., how long has the buffer of the reference LCH has been non-empty), or the sequence number of the packet that the indicated reference LCH is currently processing.

In another example embodiment, performance status of the reference LCH may be indicated by absolute or average performance of at least one past packet. The performance may be determined if, for example, the number of received HARQ NACK for the Transport Block (or part of it) has exceeded a threshold or if the number of Automatic Repeat Request (ARQ) NACK concerning the reference LCH has exceeded a threshold.

The triggering criteria may relate to configured physical-layer parameters (such as settings of MCS, TBS, Power, HARQ, MIMO, Non-Orthogonal Multiple Access (NOMA) for transmission of MAC PDU comprising at least one MAC SDU associated with the reference LCH) or allocated physical resource (PUSCH size, numerology, bandwidth part (BWP), grant type (dynamic or configured) for transmission of MAC PDU comprising at least one MAC SDU associated with the reference LCH).

In an alternative example embodiment, the at least one trigger condition may comprise reception of an indication from a base station. The indication may be a control signal (e.g. a MAC CE, or Downlink Control Information (DCI)) sent from a gNB to the UE, which instructs the UE to trigger the changes of LCP parameters for a LCH instantly, regardless of whether configured triggering criteria have been met. This may, for example, allow a gNB to dynamically change the serving cells corresponding to the original and replica packets.

Both configured triggering criteria and downlink control signalling may be jointly used. For example, to save control signalling overhead, the gNB may configure triggering criteria that allow the UE to change LCP parameters autonomously. Since the gNB may have more information regarding the overall system and network status (including the actual performance of the reference LCH), the gNB may send control signals to trigger LCP adaptation for a LCH if necessary, while avoiding erroneous predictions made by the UE itself.

The method may comprise providing an indication to a network that at least one data packet is to be transmitted using the second logical channel with the modified second set of parameters. That is, when LCPs of the LCH are changed, the UE may send an indication of the change (via e.g. MAC CE) to the gNB.

The method may comprise receiving an indication of a time period for which the modified second set of logical channel parameters is to be used. That is, a first timer may be used to ensure that the LCH returns to the default LCP settings upon timer expiration.

In an example, whenever the adaptation is triggered (either due to meeting triggering criteria or reception of control signalling from the gNB), the first timer starts. Upon the expiration of the first timer, the LCHs changes the LCP parameters/rules back to the default setting. This may reduce propagation of any potential negative impacts caused by LCP adaptation (e.g. buffer piling) as time goes by. Furthermore, the proposed method may be jointly used with any other packet-dropping scheme to prevent data backlog in the queue. In one example, at least one packet in the buffer is flushed when the timer expires.

Alternatively, instead of returning to the default LCP settings upon expiration of the first timer, transmission using the LCH may be ceased, leading to deactivation of PDCP duplication of the corresponding DRB. The PDCP duplication of this DRB may be autonomously activated again when certain conditions are met. Such mechanism may provide efficient activation and deactivation of PDCP duplication of a DRB without the need of explicit signalling from the gNB.

In one example, when the triggering criteria are met, a second timer starts and the LCH doesn't change its logical channel parameters. When the second timer expires, if the triggering conditions are still valid, the LCH changes its logical channel parameters. Alternatively, when the second timer expires the duplication of this radio bearer is deactivated autonomously. That is, the logical channel parameters are not adjusted immediately upon the occurrence of the triggering condition.

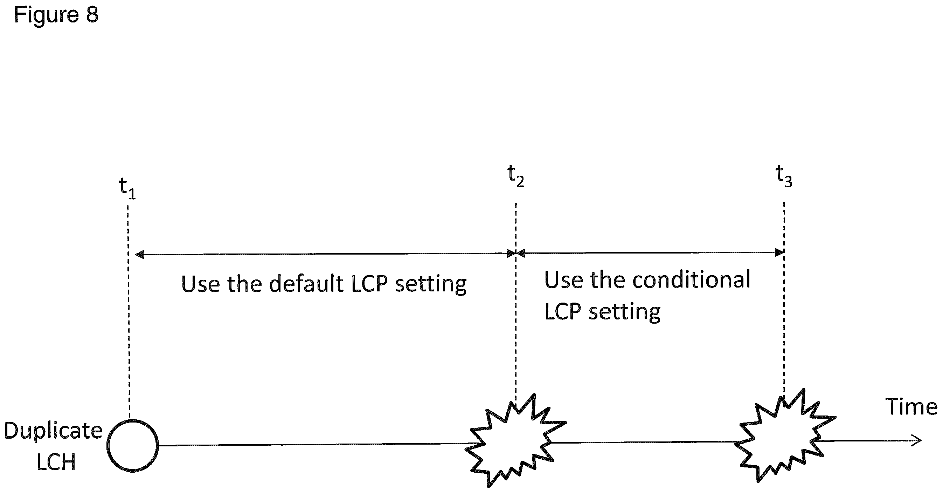

Figure 8 shows a timeline for a duplicate LCH. At a first time t₁, PDCP duplication of a DRB is activated. The LCH uses the default LCP parameters. At time t₂, a trigger condition is satisfied. The first timer then starts. The trigger condition may be a criteria associated with a reference channel as described, or an indication received from the base station. The conditional LCP parameters are used until the first timer expires at time t₃. Upon timer expiration, the UE may deactivate PDCP duplication of the DRB, flush away at least one duplicate packet in the buffer, and/or resume the default LCP setting.

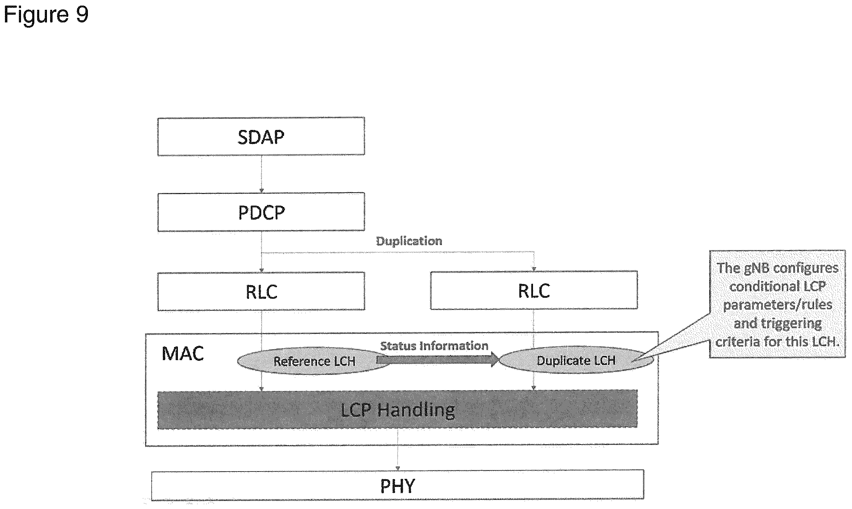

Figure 9 shows a block diagram of uplink protocols according to an example embodiment. The LCP parameters for a LCH are configured by RRC in LTE or NR, and the configured LCP parameters are used by the MAC layer to determine how a MAC PDU should be constructed for uplink transmission (based on multiplexing/assembly of MAC SDUs belonging to different LCHs). For example, the LCP parameter may determine how much data from each LCH is allocated into one MAC PDU. In an example embodiment, a DRB configured with PDCP duplication corresponds to more than one uplink LCH. For example, assuming two associated RLC entities, the original packets associated with the first RLC entity (intended for the primary link) belong to a primary LCH. Similarly, the duplicate packets associated with the second RLC entity (intended for the secondary link), belong to a secondary LCH.

The MAC layer of a UE may adaptively adjust the LCP parameters (including priority, PBR, BSD, and LCP restrictions) for a secondary Logical channel, based on the status of the primary LCH. For example, when the original packets of the primary LCH are deemed to be transmitted reliably via the primary link, then the priority of the secondary LCH corresponding to the replica may be lowered to relax uplink resource usage, in favour of other traffic present at the UE.

The gNB configures how these LCP parameters should be adjusted for a secondary LCH, as well as the triggering criteria of these changes, via RRC messages. The gNB may also send control signalling (e.g. DCI or MAC CE) to trigger a faster change of one or more LCP parameters (regardless of whether the triggering criteria are met).

In an example implementation, once configured, the LCP handling entity within the MAC of the UE processes the secondary LCH with the default set of LCP parameters. The LCP handling entity (which is in charge of constructing MAC PDUs) acquires information relating to the status of the reference LCH as well as the radio links that the reference LCH uses (especially information relating to the configured triggering criteria), to see if the conditions are met. If the conditions are met, the LCP handling entity begins to use one of the configured conditional set of LCP parameters for this LCH. Otherwise, the LCP parameters in the default set are maintained. If there is more than one conditional sets of parameters, the set of LCP parameters may be chosen based on the triggering criteria.

The method may comprise, based on at least one trigger condition, determining to transmit at least one data packet by the communication device, 200, e.g., a user equipment, using the first logical channel with a modified first set of logical channel parameters and causing the at least one data packet to be transmitted using the first logical channel with a modified first set of logical channel parameters. That is, in addition to changing LCP parameters of the secondary LCH alone, the LCP of multiple LCHs may be adapted simultaneously. For example, assuming the priority of three LCHs (LC1, LC2, and LC3) are {1 ,2,3} originally, when adaptation is triggered, their corresponding priority levels become {2,3,1}. Such a mechanism may be applied to cope with possible congestion and/or ensure that bearers exceeding maximum data burst volume (MDBV) do not starve other bearers. Combining with the downlink control signalling mentioned earlier, DCI or MAC CE may be employed to indicate the LCP parameters of multiple LCHs, along with some pre-configured parameter value sets embedded in the RRC messages. The configuration of the modified first set of logical channel parameters and the trigger condition may be as described with reference to the modified second set of logical channel parameters. For example, an indication of the modified first set of parameters may be provided to the UE as described with reference to the modified second set of parameters. The use of the first and second timers as described with reference to the second logical channel may also be applicable.

In a method as described with reference to Figures 6 and 7, if the transmission of the original PDCP PDUs is configured by the lower layers (MAC/PHY) in a sufficiently reliable fashion via the primary link, or if the serving cell (primary link) for the transmission of this original PDCP PDUs has sufficiently good link quality, then the LCH of the duplicated PDCP PDUs is processed to transmit in a less-aggressive fashion (e.g. the priority and the prioritized bit rate of this LCH could be lowered). Therefore, instead of dropping the duplicates entirely, the proposed method processes the duplicates but in a way that is less likely to jeopardize the QoS of other traffic by occupying too much resource.

Conversely, if the original PDCP PDU is allocated to a serving cell with poor radio link quality, or is configured in a less reliable fashion, the LCH of the duplicated PDCP may be processed to transmit in a more aggressive fashion (e.g. with higher priority and/or higher prioritized bit rate, and/or allocating to a low latency radio resource), in a bid to save the original packet transmission that is deemed to be precarious, via more aggressive PDCP duplication. The method provides a mechanism for Adaptive LCP, in which the LCP parameters for a LCH could be adaptively changed, based on conditions such as the status of the LCH corresponding to the original PDCP PDU transmission and/or the radio link it is using.

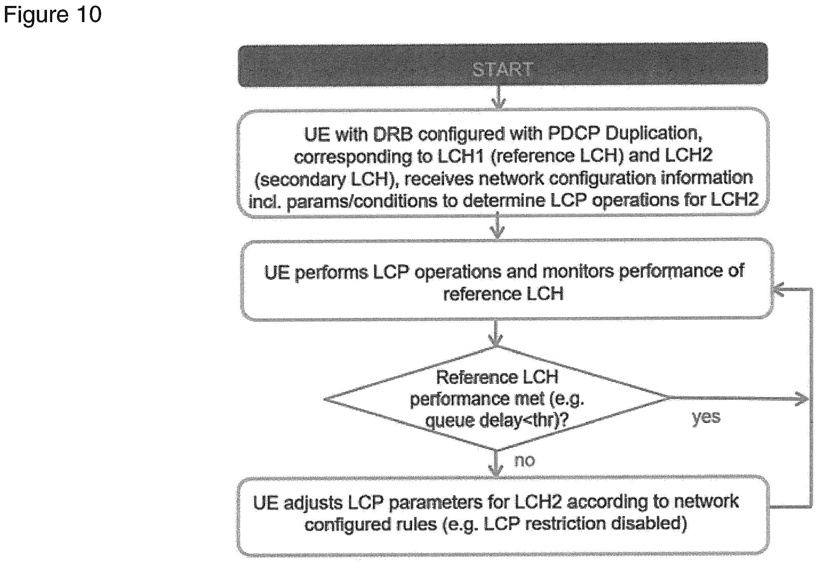

Figure 10 shows a flow chart of an example implementation. In a first step, a UE with DRB configured with PDCP duplication corresponding to LCH1 (reference LCH) and LCH2 (secondary LCH), receives network configuration information including parameters and/or conditions to determine LCP operations for LCH2.

The UE then performs LCP operation and monitors performance of reference LCH. If the reference LCH performance is met (e.g., the queue delay is less than a threshold), the UE continues to perform LCP operations and monitoring performance of the reference LCH.

If the reference LCH performance is not met, the UE adjusts LCP parameters for LCH2 according to the network configured rules (e.g., the LCP restriction may be disabled).

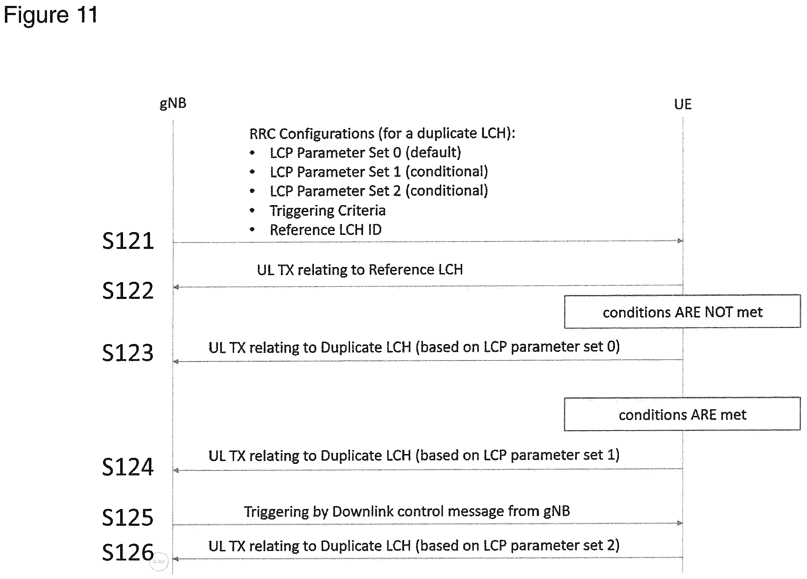

Figure 11 shows a signalling flow diagram according to an example embodiment.

In the first step, S121, at least one configuration message may be provided from a control apparatus 300, e.g., a gNB to a communication device 200, e.g. a UE. The configuration message may configure more than one LCH per DRB, and more than one set of LCP parameters (including priority, PBR, BSD, and LCP restrictions) for at least one uplink logical channel (LCH). The configuration message may configure the triggering criteria, i.e., adjustment rules and/or thresholds for the UE to determine which of these sets to use for the LCH at a given time.

At least one configuration message may be provided from a gNB to a UE, configuring a reference LCH (primary LCH) that another LCH (secondary LCH) should monitor to determine the change of its LCP parameters. By default, the reference LCH is the LCH associated to the primary link.

In a second step, S122, of the example signalling flow, the UE causes a transmission on the reference LCH where the trigger conditions are not met. In this case, in step S123, the UE causes a UL transmission on the duplicate LCH based on the default parameter set.

In an alternative step, S124, the conditions on the reference LCH are met and the UE causes a UL transmission on the duplicate LCH based on LCP parameter set 1 (the first conditional set of parameters)

In a next step, S125, the UE receives a control message from the gNB which acts as the trigger condition and causes transmission on the duplicate LCH based on LCP parameter set 2 (a second conditional set of parameters) in step S126.

The UE is thus capable of dynamically changing the LCP parameters associating to at least one secondary LCH (e.g. LCH associated to a secondary link) in accordance to the configured triggering criteria and thresholds, which apply on the primary link (primary LCH).

Alternatively, or in addition, a control signal may be provided from a gNB to a UE that enforces the UE to change at least one LCP parameter associating to at least one uplink LCH.

In a first example embodiment, the triggering criteria is the measured CQI on a serving cell of the reference LCH. If the measured CQI is below a threshold for a certain amount of time, the PBR and/or priority of the duplicate LCH is increased. These parameters may fall back to the original values if and when the radio link quality for the reference LCH improves. Conversely, if the measured CQI on the serving cell of the reference LCH is higher than a threshold, the PBR and/or priority of the second LCH is reduced, so the transmission of duplicated packets using the second LCH would not significant affect other traffic.

In this example, if the transmission of the original PDCP PDU is deemed to suffer from bad radio performance, the duplication is scheduled aggressively to ensure that the duplicated packet i sent rapidly in light of probable link failure of the original PDCP PDU (corresponding to the reference LCH) transmission.

In a second example embodiment, the queuing delay of the first LCH is the triggering criteria. When the queueing delay of the reference LCH exceeds a certain time limit, the LCP restriction rule for the secondary LCH relating to maximum PUSCH duration (i.e. ***maxPUSCH-Duration*)** may be changed (e.g. reducing maximum allowed duration), or LCP restriction of using grant-free resource (i.e. ***configuredGrantType1Allowed*)** may be disabled to allow low-latency duplicate transmission. Likewise, when the queueing delay for the primary LCH is below a threshold (which may be a different threshold value), the LCP restriction may be enabled again.

In this, second, example if the transmission of the original PDCP PDUs are likely to fail in meeting the latency requirement, the duplicated packet is immediately allocated to low-latency radio resources to ensure it is transmitted more rapidly. This may increase resource efficiency since selective use of duplication when needed. Also, with no additional network signaling cost the activation of duplication may be controlled which may provide a faster reaction to the radio fluctuations.

In a third example embodiment, when receiving an indication (embedded in MAC CE or DCI) from the gNB, the LCP restriction rule relating to allowed serving cell (i.e. ***allowedServingCells)*** is changed from one component carrier to another - this is applicable to the schemes wherein the serving cell for the duplicate link can be switched rapidly in accordance to criteria such as channel quality.

That is, in this third example, as instructed by the gNB, the transmission of the duplicated packet may be switched from one serving cell to another, thereby enabling fast switching of the serving cell.

In a fourth example embodiment, it is presumed that the duplicate LCH has been configured with LCP restriction of mapping to serving cells in licensed band only. When the transmission of the reference LCH is deemed to be reliable (e.g. the serving cell of the reference LCH has very good radio link quality), then the LCP restriction for the duplicate LCH may be disabled so that it may be mapped to a serving cell in the unlicensed band as well. Alternatively, the allowed serving cell may be switched from licensed-band only to unlicensed-band only, thereby enforcing the duplicate LCH to use unlicensed spectrum.

If the reference LCH is likely to be transmitted reliably, the transmission of the duplicated LCH may be switched to unlicensed band (which is subject to LBT) instead of occupying licensed bands that are typically more reliable and should be leveraged by other more crucial traffics.

In a fifth example embodiment, it may be more desirable if the reference LCH and the duplicate LCH are processing packet transmissions at the same pace. When the progress of packet transmission of the reference LCH is deemed to be leading the duplicate LCH to a certain extent (e.g. the difference between the sequence number of the packet that the reference LCH is currently processing and the sequence number of the packet that the duplicate LCH is currently processing is larger than a threshold), then the LCP parameters such as the priority and/or PBR for the duplicate LCH may be increased to facilitate pace synchronization between the two LCHs.

As shown by the example embodiments described above, the proposed method may provide a mechanism that supports considered PDCP duplication enhancement in general, including both resource efficient PDCP duplication and dynamic switching.

Changes of LCP parameters may affect the overall fairness of different traffic flows. However, since duplicate LCHs are essentially used as backup when the original transmission fails to fulfil the required QoS, the fairness toward the duplicate LCH may be deemed less critical. Furthermore, the possible LCP parameters for a duplicate LCH upon adaptation may be configured so other traffics are not significantly jeopardized even if adaptation occurs. This may be achieved via gNB implementation (i.e. determination of LCP parameters to be configured for the LCHs).

As compared to previous proposals that selectively drop packet replicas to improve efficiency, the proposed scheme may permit data packet replicas to be transmitted in a more "aggressive" manner when the performance of its counterpart LCH degrades. Hence, the proposed method is flexible and capable of handling both the case wherein the counterpart LCH is suffering from degraded performance, and the case wherein the original LCH is suffering from degraded performance. In general, the method may be beneficial in terms of reducing radio resource occupied by the duplicates of data packets when duplication is less necessary, providing spare radio resources for other traffic.

The method may be implemented in a communication device 200, e.g., a user equipment, as described with reference to Figure 2 or a control apparatus 200, e.g., a gNB, as described with reference to figure 3. An apparatus comprises means for causing at least one data packet to be transmitted by a user equipment using a first logical channel having a first set of logical channel parameters, and at least one data packet to be transmitted by the user equipment using a second logical channel having a second set of logical channel parameters, determining whether at least one trigger condition is met and, if so, causing the at least one data packet to be transmitted by the user equipment using the second logical channel with the modified second set of logical channel parameters. An apparatus comprises means for providing, to a user equipment an indication of at least one of a first set of logical channel parameters associated with a first logical channel, a second set of logical channel parameters and one or more modified second set of logical channel parameters associated with a second logical channel, providing an indication of at least one criterion to the user equipment, receiving, from the user equipment, at least one data packet using the first logical channel having the first set of logical channel parameters, and at least one data packet using the second logical channel having the second set of logical channel parameters or the modified second set of logical parameters, based on whether at least one trigger condition is determined by the user equipment to be met, wherein the at least one trigger condition comprises the at least one criterion.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to URLLC, similar principles can be applied in relation to other networks and communication systems where packet duplication is performed. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the appended claims.

In general, the various embodiments may be implemented in hardware or special purpose circuitry, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate. The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. The scope of the invention is defined by the appended claims.

## Claims

1. An apparatus (200), said apparatus (200) comprising means for:
causing at least one data packet to be transmitted by a user equipment (200) using a first logical channel having a first set of logical channel parameters, and at least one data packet to be transmitted by the user equipment (200) using a second logical channel having a second set of logical channel parameters, wherein the at least one data packet to be transmitted by the user equipment (200) using the second logical channel is a duplicate of the at least one data packet to be transmitted by the user equipment (200) using the first logical channel;
determining by the user equipment (200) whether at least one trigger condition is met; and, if so,
causing the at least one data packet to be transmitted by the user equipment (200) using the second logical channel with a modified second set of logical channel parameters, wherein the at least one trigger condition relates to at least one of transmission status, transmission configuration, data transmission performance and radio link quality; and the logical channel parameters comprise logical channel prioritisation parameters.

2. An apparatus according to claim 1, wherein the logical channel prioritisation parameters comprise at least one of priority, prioritised bit rate, bucket size duration, and parameters relating to logical channel prioritisation restrictions.

3. An apparatus according to claim 2, wherein the parameters relating to logical channel prioritisation restrictions are associated with configurations of uplink grants for the second logical channel mapping.

4. An apparatus according to any of claims 1 to 3, comprising means for:
receiving an indication of at least one of the first set of logical channel parameters, the second set of channel parameters and one or more modified second set of logical channel parameters.

5. An apparatus according to claim 4, wherein the indication of the one or more modified second set of logical channel parameters comprises an indication of an offset for at least one of the second set of logical channel parameters.

6. An apparatus according to any of claims 1 to 5, comprising means for receiving an indication of a time period for which the modified second set of logical channel parameters is to be used.

7. An apparatus according to claim 6, comprising means for starting a first timer when the modified second set of logical channel parameters is used.

8. An apparatus according to claim 7, comprising means for flushing the at least one data packet to be transmitted using the second logical channel from a buffer when the first timer expires.

9. An apparatus according to claim 7 or claim 8, comprising means for causing packet duplication of at least one radio bearer to stop when the first timer expires.

10. An apparatus according to claim 9, comprising means for determining, based on the at least one trigger condition, to cause packet duplication of the at least one radio bearer to restart.

11. An apparatus according to any of claims 1 to 10, comprising means for providing an indication to a network that at least one data packet is to be transmitted using the second logical channel with the modified second set of parameters.

12. An apparatus according to any of claims 1 to 11 comprising means for determining,
based on the least one trigger condition, to start a second timer;
determining if the least one trigger conditions is valid when the timer expires; and
if so, causing the at least one data packet to be transmitted using the second logical channel with a modified second set of logical channel parameters or causing packet duplication of at least one radio bearer to stop.

13. An apparatus (300), said apparatus (300) comprising means for:
providing, to a user equipment (200) an indication of at least one of a first set of logical channel parameters associated with a first logical channel, a second set of logical channel parameters and one or more modified second set of logical channel parameters associated with a second logical channel,;
providing an indication of at least one criterion to the user equipment (200); and
receiving, from the user equipment (200), at least one data packet using the first logical channel having the first set of logical channel parameters, and at least one data packet using the second logical channel having the second set of logical channel parameters or having the modified second set of logical parameters depending on whether at least one trigger condition is determined by the user equipment (200) to be met or not, wherein the at least one data packet received using the second logical channel is a duplicate of the at least one data packet received using the first logical channel, wherein the at least one trigger condition comprises the at least one criterion, wherein the at least one trigger condition relates to at least one of transmission status, transmission configuration, data transmission performance and radio link quality; and the logical channel parameters comprise logical channel prioritisation parameters.

14. An apparatus according to claim 13, wherein the indication to the user equipment indicates the at least one data packet to be transmitted by the user equipment using the second logical channel with a modified second set of logical channel parameters.

15. A method comprising:
causing at least one data packet to be transmitted by a user equipment (200) using a first logical channel having a first set of logical channel parameters, and at least one data packet to be transmitted by the user equipment (200) using a second logical channel having a second set of logical channel parameters, wherein the at least one data packet to be transmitted by the user equipment (200) using the second logical channel is a duplicate of the at least one data packet to be transmitted by the user equipment using the first logical channel;
determining by the user equipment (200) whether at least one trigger condition is met; and, if so,
causing the at least one data packet to be transmitted by the user equipment (200) using the second logical channel with a modified second set of logical channel parameters, wherein the at least one trigger condition relates to at least one of transmission status, transmission configuration, data transmission performance and radio link quality; and the logical channel parameters comprise logical channel prioritisation parameters.

16. A computer readable medium comprising instructions which, when executed by a computer, cause the computer to to perform at least the following:
causing at least one data packet to be transmitted by a user equipment (200) using a first logical channel having a first set of logical channel parameters, and at least one data packet to be transmitted by the user equipment (200) using a second logical channel having a second set of logical channel parameters, wherein the at least one data packet to be transmitted by the user equipment using the second logical channel is a duplicate of the at least one data packet to be transmitted by the user equipment (200) using the first logical channel;
determining by the user equipment (200) whether at least one trigger condition is met; and, if so,
causing the at least one data packet to be transmitted by the user equipment (200) using the second logical channel with a modified second set of logical channel parameters, wherein the at least one trigger condition relates to at least one of transmission status, transmission configuration, data transmission performance and radio link quality; and the logical channel parameters comprise logical channel prioritisation parameters.

## Patentansprüche

1. Vorrichtung (200), wobei die Vorrichtung (200) Mittel für Folgendes umfasst:
Bewirken, dass mindestens ein Datenpaket von einer Teilnehmereinrichtung (200) unter Verwendung eines ersten logischen Kanals mit einem ersten Satz von logischen Kanalparametern übertragen wird, und mindestens ein Datenpaket von der Teilnehmereinrichtung (200) unter Verwendung eines zweiten logischen Kanals mit einem zweiten Satz von logischen Kanalparametern übertragen wird, wobei das mindestens eine Datenpaket, das von der Teilnehmereinrichtung (200) unter Verwendung des zweiten logischen Kanals zu übertragen ist, ein Duplikat des mindestens einen Datenpakets ist, das von der Teilnehmereinrichtung (200) unter Verwendung des ersten logischen Kanals zu übertragen ist;
Bestimmen durch die Teilnehmereinrichtung (200), ob mindestens eine Auslösebedingung erfüllt ist; und, wenn ja,
Bewirken, dass das mindestens eine Datenpaket von der Teilnehmereinrichtung (200) unter Verwendung des zweiten logischen Kanals mit einem modifizierten zweiten Satz von logischen Kanalparametern übertragen wird, wobei die mindestens eine Auslösebedingung mindestens einen Übertragungsstatus, eine Übertragungsauslegung, eine Datenübertragungsleistung und eine Funkverbindungsqualität betrifft; und die logischen Kanalparameter logische Kanalpriorisierungsparameter umfassen.

2. Vorrichtung nach Anspruch 1, wobei die logischen Kanalpriorisierungsparameter mindestens eines von Priorität, priorisierte Bitrate, Bucketgrößendauer und Parametern, die logische Kanalpriorisierungseinschränkungen betreffen, umfassen.

3. Vorrichtung nach Anspruch 2, wobei die Parameter die logische Kanalpriorisierungseinschränkungen betreffen, mit Auslegungen von Uplinkgewährungen für die zweite logische Kanalzuordnung verknüpft sind.

4. Vorrichtung nach einem der Ansprüche 1 bis 3, die Mittel für Folgendes umfasst:
Empfangen einer Anzeige von mindestens einem des ersten Satzes von logischen Kanalparametern, des zweiten Satzes von Kanalparametern und einem oder mehreren modifizierten zweiten Sätze von logischen Kanalparametern.

5. Vorrichtung nach Anspruch 4, wobei die Anzeige des einen oder der mehreren modifizierten zweiten Sätze von logischen Kanalparametern eine Anzeige eines Versatzes für mindestens einen des zweiten Satzes von logischen Kanalparametern umfasst.

6. Vorrichtung nach einem der Ansprüche 1 bis 5, die Mittel zum Empfangen einer Anzeige einer Zeitperiode umfasst, für die der modifizierte zweite Satz von logischen Kanalparametern zu verwenden ist.

7. Vorrichtung nach Ansprüche 6, die Mittel zum Starten eines ersten Timers umfasst, wenn der modifizierte zweite Satz von logischen Kanalparametern verwendet wird.

8. Vorrichtung nach Ansprüche 7, die Mittel zum Entfernen des mindestens einen Datenpakets, das unter Verwendung des zweiten logischen Kanals zu übertragen ist, aus einem Puffer, wenn der erste Timer abläuft, umfasst.

9. Vorrichtung nach Anspruch 7 oder Anspruch 8, die Mittel zum Bewirken, dass eine Paketduplizierung mindestens eines Funkträgers beendet wird, wenn der erste Timer abläuft, umfasst.

10. Vorrichtung nach Anspruch 9, die Mittel zum Bestimmen auf Basis der mindestens einen Auslösebedingung, einen Neustart der Paketduplizierung des mindestens einen Funkträgers zu bewirken, umfasst.

11. Vorrichtung nach einem der Ansprüche 1 bis 10, die Mittel zum Bereitstellen einer Anzeige für ein Netzwerk, das mindestens ein Datenpaket unter Verwendung des zweiten logischen Kanals mit dem modifizierten zweiten Satz von Parametern zu übertragen ist, umfasst.

12. Vorrichtung nach einem der Ansprüche 1 bis 11, die Mittel zum Bestimmen auf Basis der mindestens einen Auslösebedingung, einen zweiten Timer zu starten, umfasst;
Bestimmen, ob die mindestens eine Auslösebedingung gültig ist, wenn der Timer abläuft; und
wenn ja, Bewirken, dass das mindestens eine Datenpaket unter Verwendung des zweiten logischen Kanals mit einem modifizierten zweiten Satz von logischen Kanalparametern übertragen wird, oder Bewirken, dass eine Paketduplizierung von mindestens einem Funkträger beendet wird.

13. Vorrichtung (300), wobei die Vorrichtung (300) Mittel für Folgendes umfasst:
Bereitstellen einer Anzeige von mindestens einem von einem ersten Satz von logischen Kanalparametern, die mit einem ersten logischen Kanal verknüpft sind, einem zweiten Satz von logischen Kanalparametern und einem oder mehreren modifizierten zweiten Sätze von logischen Kanalparametern, die mit einem zweiten logischen Kanal verknüpft sind, für eine Teilnehmereinrichtung (200) ;
Bereitstellen einer Anzeige von mindestens einem Kriterium für die Teilnehmereinrichtung (200); und
Empfangen von mindestens einem Datenpaket unter Verwendung des ersten logischen Kanals mit dem ersten Satz von logischen Kanalparametern und mindestens einem Datenpaket unter Verwendung des zweiten logischen Kanals mit dem zweiten Satz von logischen Kanalparametern oder - in Abhängigkeit davon, ob von einer Teilnehmereinrichtung (200) bestimmt wird, dass mindestens eine Auslösebedingung erfüllt ist oder nicht - mit dem modifizierten zweiten Satz von logischen Parametern von der Teilnehmereinrichtung (200), wobei das mindestens eine Datenpaket, das unter Verwendung des zweiten logischen Kanals empfangen wird, ein Duplikat des mindestens einen Datenpakets ist, das unter Verwendung des ersten logischen Kanals empfangen wird, wobei die mindestens eine Auslösebedingung das mindestens eine Kriterium umfasst, wobei die mindestens eine Auslösebedingung mindestens eines von einem Übertragungsstatus, einer Übertragungsauslegung, einer Datenübertragungsleistung und einer Funkverbindungsqualität betrifft; und die logischen Kanalparameter logische Kanalpriorisierungsparameter umfassen.

14. Vorrichtung nach Anspruch 13, wobei die Anzeige für die Teilnehmereinrichtung das mindestens eine Datenpaket anzeigt, das von der Teilnehmereinrichtung unter Verwendung des zweiten logischen Kanals mit einem modifizierten zweiten Satz von logischen Kanalparametern zu übertragen ist.

15. Verfahren, das Folgendes umfasst:
Bewirken, dass mindestens ein Datenpaket von einer Teilnehmereinrichtung (200) unter Verwendung eines ersten logischen Kanals mit einem ersten Satz von logischen Kanalparametern übertragen wird und mindestens ein Datenpaket von der Teilnehmereinrichtung (200) unter Verwendung eines zweiten logischen Kanals mit einem zweiten Satz von logischen Kanalparametern übertragen wird, wobei das mindestens eine Datenpaket, das von der Teilnehmereinrichtung (200) unter Verwendung des zweiten logischen Kanals zu übertragen ist, ein Duplikat des mindestens einen Datenpakets ist, das von der Teilnehmereinrichtung unter Verwendung des ersten logischen Kanals zu übertragen ist;
Bestimmen durch die Teilnehmereinrichtung (200), ob mindestens eine Auslösebedingung erfüllt ist; und, wenn ja,
Bewirken, dass das mindestens eine Datenpaket von der Teilnehmereinrichtung (200) unter Verwendung des zweiten logischen Kanals mit einem modifizierten zweiten Satz von logischen Kanalparametern übertragen wird, wobei die mindestens eine Auslösebedingung mindestens einen Übertragungsstatus, eine Übertragungsauslegung, eine Datenübertragungsleistung und eine Funkverbindungsqualität betrifft; und die logischen Kanalparameter logische Kanalpriorisierungsparameter umfassen.

16. Computerlesbares Medium, das Anweisungen umfasst, die, wenn sie von einem Computer ausgeführt werden, bewirken, dass der Computer mindestens Folgendes durchführt:
Bewirken, dass mindestens ein Datenpaket von einer Teilnehmereinrichtung unter Verwendung eines ersten logischen Kanals mit einem ersten Satz von logischen Kanalparametern übertragen wird und mindestens ein Datenpaket von der Teilnehmereinrichtung (200) unter Verwendung eines zweiten logischen Kanals mit einem zweiten Satz von logischen Kanalparametern übertragen wird, wobei das mindestens eine Datenpaket, das von der Teilnehmereinrichtung (200) unter Verwendung des zweiten logischen Kanals zu übertragen ist, ein Duplikat des mindestens einen Datenpakets ist, das von der Teilnehmereinrichtung (200) unter Verwendung des ersten logischen Kanals zu übertragen ist;
Bestimmen durch die Teilnehmereinrichtung (200), ob mindestens eine Auslösebedingung erfüllt ist; und, wenn ja,
Bewirken, dass das mindestens eine Datenpaket von der Teilnehmereinrichtung (200) unter Verwendung des zweiten logischen Kanals mit einem modifizierten zweiten Satz von logischen Kanalparametern übertragen wird, wobei die mindestens eine Auslösebedingung mindestens einen Übertragungsstatus, eine Übertragungsauslegung, eine Datenübertragungsleistung und eine Funkverbindungsqualität betrifft; und die logischen Kanalparameter logische Kanalpriorisierungsparameter umfassen.

## Revendications

1. Appareil (200), ledit appareil (200) comprenant des moyens pour :
provoquer la transmission d'au moins un paquet de données par un équipement utilisateur (200) à l'aide d'un premier canal logique doté d'un premier ensemble de paramètres de canal logique, et la transmission d'au moins un paquet de données par l'équipement utilisateur (200) à l'aide d'un deuxième canal logique doté d'un deuxième ensemble de paramètres de canal logique, dans lequel l'au moins un paquet de données devant être transmis par l'équipement utilisateur (200) à l'aide du deuxième canal logique est un duplicata de l'au moins un paquet de données devant être transmis par l'équipement utilisateur (200) à l'aide du premier canal logique ;
déterminer par l'équipement utilisateur (200) si au moins une condition de déclenchement est remplie ; et si c'est le cas,
provoquer la transmission de l'au moins un paquet de données par l'équipement utilisateur (200) à l'aide du deuxième canal logique avec un deuxième ensemble de paramètres de canal logique modifié, dans lequel l'au moins une condition de déclenchement concerne au moins un parmi un statut de transmission, une configuration de transmission, une performance de transmission de données et une qualité de liaison radio ; et les paramètres de canal logique comprennent des paramètres de priorité de canal logique.

2. Appareil selon la revendication 1, dans lequel les paramètres de priorité de canal logique comprennent au moins un parmi une priorité, un débit binaire prioritaire, une durée de taille de compartiment et des paramètres relatifs à des restrictions de priorité de canal logique.

3. Appareil selon la revendication 2, dans lequel les paramètres relatifs à des restrictions de priorité de canal logique sont associés aux configurations des autorisations de liaison montante pour le mappage de deuxième de canal logique.

4. Appareil selon l'une des revendications 1 à 3, comprenant des moyens pour :
recevoir une indication d'au moins un parmi le premier ensemble de paramètres de canal logique, le deuxième ensemble de paramètres de canal et un ou plusieurs deuxièmes ensembles de paramètres de canal logique modifiés.

5. Appareil selon la revendication 4, dans lequel l'indication des un ou plusieurs deuxièmes ensembles de paramètres de canal logique modifiés comprend une indication d'un décalage pour au moins un paramètre du deuxième ensemble de paramètres de canal logique.

6. Appareil selon l'une des revendications 1 à 5, comprenant des moyens pour recevoir une indication d'une période de temps pendant laquelle le deuxième ensemble de paramètres de canal logique modifié doit être utilisé.

7. Appareil selon la revendication 6, comprenant des moyens pour démarrer un premier temporisateur lorsque le deuxième ensemble de paramètres de canal logique modifié est utilisé.

8. Appareil selon la revendication 7, comprenant des moyens pour vider l'au moins un paquet de données devant être transmis à l'aide du deuxième canal logique d'une mémoire tampon lorsque le premier temporisateur expire.

9. Appareil selon la revendication 7 ou la revendication 8, comprenant des moyens pour provoquer l'arrêt d'une duplication de paquets d'au moins une porteuse radio lorsque le premier temporisateur expire.

10. Appareil selon la revendication 9, comprenant des moyens pour déterminer, sur la base de l'au moins une condition de déclenchement, de provoquer un redémarrage d'une duplication de paquets de l'au moins une porteuse radio.

11. Appareil selon l'une des revendications 1 à 10, comprenant des moyens pour fournir une indication à un réseau selon laquelle au moins un paquet de données doit être transmis à l'aide du deuxième canal logique avec le deuxième ensemble de paramètres modifié.

12. Appareil selon l'une des revendications 1 à 11 comprenant des moyens pour
déterminer, sur la base de l'au moins une condition de déclenchement, de démarrer un deuxième temporisateur ;
déterminer si l'au moins une condition de déclenchement est valide lorsque le temporisateur expire ; et
si c'est le cas, provoquer la transmission de l'au moins un paquet de données à l'aide du deuxième canal logique avec un deuxième ensemble de paramètres de canal logique modifié ou provoquer l'arrêt d'une duplication de paquets d'au moins une porteuse radio.

13. Appareil (300), ledit appareil (300) comprenant des moyens pour :
fournir à un équipement utilisateur (200) une indication d'au moins un parmi un premier ensemble de paramètres de canal logique associés à un premier canal logique, un deuxième ensemble de paramètres de canal logique et un ou plusieurs deuxièmes ensembles de paramètres de canal logique modifiés associés à un deuxième canal logique ;
fournir une indication d'au moins un critère à l'équipement utilisateur (200) ; et
recevoir, de l'équipement utilisateur (200), au moins un paquet de données à l'aide du premier canal logique doté du premier ensemble de paramètres de canal logique, et au moins un paquet de données à l'aide du deuxième canal logique doté du deuxième ensemble de paramètres de canal logique ou doté du deuxième ensemble de paramètres logiques modifié selon qu'au moins une condition de déclenchement est déterminée par l'équipement utilisateur (200) comme étant remplie ou non, dans lequel l'au moins un paquet de données reçu à l'aide du deuxième canal logique est un duplicata de l'au moins un paquet de données reçu à l'aide du premier canal logique, dans lequel l'au moins une condition de déclenchement comprend l'au moins un critère, dans lequel l'au moins une condition de déclenchement concerne au moins un parmi un statut de transmission, une configuration de transmission, une performance de transmission de données et une qualité de liaison radio ; et les paramètres de canal logique comprennent des paramètres de priorité de canal logique.

14. Appareil selon la revendication 13, dans lequel l'indication à l'équipement utilisateur indique que l'au moins un paquet de données doit être transmis par l'équipement utilisateur à l'aide du deuxième canal logique avec un deuxième ensemble de paramètres de canal logique modifié.

15. Procédé comprenant :
la provocation de la transmission d'au moins un paquet de données par un équipement utilisateur (200) à l'aide d'un premier canal logique doté d'un premier ensemble de paramètres de canal logique, et la transmission d'au moins un paquet de données par l'équipement utilisateur (200) à l'aide d'un deuxième canal logique doté d'un deuxième ensemble de paramètres de canal logique, dans lequel l'au moins un paquet de données devant être transmis par l'équipement utilisateur (200) à l'aide du deuxième canal logique est un duplicata de l'au moins un paquet de données devant être transmis par l'équipement utilisateur à l'aide du premier canal logique ;
la détermination, par l'équipement utilisateur (200), précisant si au moins une condition de déclenchement est remplie ; et si c'est le cas, la provocation de la transmission de l'au moins un paquet de données par l'équipement utilisateur (200) à l'aide du deuxième canal logique avec un deuxième ensemble de paramètres de canal logique modifié, dans lequel l'au moins une condition de déclenchement concerne au moins un parmi un statut de transmission, une configuration de transmission, une performance de transmission de données et une qualité de liaison radio ; et les paramètres de canal logique comprennent des paramètres de priorité de canal logique.

16. Support lisible par ordinateur comprenant des instructions qui, lorsqu'elles sont exécutées par un ordinateur, amènent l'ordinateur à réaliser au moins ce qui suit :
provoquer la transmission d'au moins un paquet de données par un équipement utilisateur (200) à l'aide d'un premier canal logique doté d'un premier ensemble de paramètres de canal logique, et la transmission d'au moins un paquet de données par l'équipement utilisateur (200) à l'aide d'un deuxième canal logique doté d'un deuxième ensemble de paramètres de canal logique, dans lequel l'au moins un paquet de données devant être transmis par l'équipement utilisateur à l'aide du deuxième canal logique est un duplicata de l'au moins un paquet de données devant être transmis par l'équipement utilisateur (200) à l'aide du premier canal logique ;
déterminer par l'équipement utilisateur (200) si au moins une condition de déclenchement est remplie ; et si c'est le cas,
provoquer la transmission de l'au moins un paquet de données par l'équipement utilisateur (200) à l'aide du deuxième canal logique avec un deuxième ensemble de paramètres de canal logique modifié, dans lequel l'au moins une condition de déclenchement concerne au moins un parmi un statut de transmission, une configuration de transmission, une performance de transmission de données et une qualité de liaison radio ; et les paramètres de canal logique comprennent des paramètres de priorité de canal logique.
